# EUROPÄISCHE PATENTSCHRIFT

(11) **EP 4 386 267 B1**
(45) Veröffentlichungstag und Bekanntmachung des Hinweises auf die Patenterteilung: **25.12.2024**
(21) Anmeldenummer: 23206045.9
(22) Anmeldetag: 26.10.2023
(51) Int. Cl.: F24C 15/00, H05B 6/64, F21V 33/00, F21W 131/307, G02B 6/00, F21V 8/00

(54) **GARGERÄTELEUCHTE**
COOKING APPLIANCE LIGHT
LAMPE POUR APPAREIL DE CUISSON

(30) Priorität: 15.12.2022 DE 102022133410
(43) Veröffentlichungstag der Anmeldung: 19.06.2024
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Mentler, Katharina, 58730 Fröndenberg (DE); Henning, Marie, 58739 Wickede-Echthausen (DE)
(74) Vertreter: Ostriga Sonnet Wirths & Vorwerk

(56) Entgegenhaltungen:
- AT-B1- 511 476
- CN-A- 108 980 917
- DE-A1- 102012 223 678
- DE-A1- 102015 225 992
- US-A- 5 432 876
- US-A1- 2002 008 969
- US-B2- 6 367 941

## Beschreibung

Die Erfindung betrifft eine Gargeräteleuchte einbaubar in einem Gargerät, insbesondere einem Backofen, einem Mikrowellengargerät oder einem Dampfgarer, wobei das Gargerät einen Garraum aufweist, der von einer Garraumwandung umgrenzt ist und mit einer Garraumtür verschließbar ist, mit wenigstens einer LED-Lichtquelle, die außerhalb des Garraums in einer Halterung befestigbar ist und einem Lichtleitstab, der sich von der Halterung aus entlang seiner Längsachse in den Garraum erstreckt, wobei der Lichtleitstab im Wesentlichen als Rundstab ausgebildet ist, wobei der Lichtleitstab eine Lichteinkopplungsfläche aufweist, in welche Licht aus der Lichtquelle in den Lichtleitstab eingekoppelt wird, und eine Lichtauskopplungsfläche, aus welcher wenigstens ein Teil des eingekoppelten Lichts in den Garraum ausgekoppelt wird, wobei der Lichtleitstab auf seiner Mantelfläche eine eingearbeitete, lichtlenkende Auskopplungsstruktur umfasst, die das Licht über die Lichtauskopplungsfläche in den Garraum auskoppelt.

Im druckschriftlich nicht belegbaren Stand der Technik sind LED-basierte Beleuchtungseinrichtungen für Gargeräte in ausreichender Form bekannt. Die besonders temperaturempfindlichen LED-Leuchten müssen bei Gargeräten, insbesondere bei Backöfen, in denen hohe Temperaturen generiert werden können, ausreichend geschützt werden. Meist wird die LED-Lichtquelle daher außerhalb des eigentlichen Garraums angeordnet. Die Garraumwandung umfasst dann eine oder mehrere Ausnehmungen für die Durchführung eines Lichtleitstabes.

Zunehmend wird darauf Wert gelegt, Gargeräteleuchten so zu gestalten, dass der Garraum möglichst gleichmäßig ausgeleuchtet wird und der Nutzer insbesondere das Gargut während des Garvorgangs betrachten kann.

Nicht nur die Anordnung der einzelnen Bauteile der Beleuchtungseinrichtung, sondern auch die Richtung des Lichts durch eine vorbestimmte Lichtauskopplung bestimmen die Qualität der Ausleuchtung des Garraums.

Bekannt ist beispielsweise aus der DE10 2011 087 811 A1, eine Beleuchtungseinrichtung für den Garraum in der Garraumtür anzuordnen und die Tür selbst mit einer Reflektionslage zu versehen, welche das Licht in den Garraum reflektiert.

Auch ist bekannt, Reflektionsflächen im Garraum außerhalb des von außen sichtbaren Bereichs anzuordnen, welche das von der LED-Lichtquelle aufgenommene Licht in den Garraum abstrahlen, so die DE10 2016 010 198 A1.

Die DE10 2015 225 992 A1 schlägt eine Lichterzeugungseinrichtung für ein Gargerät vor, bei der neben einem mit Strukturen versehenen Lichtleiter ein Lichtverteilelement vorhanden ist, welches die Lichtverteilung in die Muffel des Gargeräts hinein übernimmt.

Auch die CN108 980 917 A beschreibt die Anordnung eines Lichtleiters mit einer LED-Lichtquelle für einen Ofen in einem speziell an die Offenmuffel angeflanschten Montagegehäuse, welches zur Ofenmuffel hin mit einer hitzebeständigen Abdeckung versehen ist.

Diese Anordnungen bedeuten jedoch einen hohen Aufwand in der Herstellung, da beispielsweise die Reflektionsschicht zusätzlich aufgebracht werden muss oder ein separates Gehäuse gefertigt und montiert werden muss. Die Materialien hierfür und auch die Ausführung selbst stellen einen zusätzlichen Kostenaspekt dar.

Die DE10 2012 223 678 A1 zeigt eine Beleuchtungsvorrichtung für ein Gargerät, bei der der Lichtleiter zur Richtung des Lichts eine eingearbeitete Struktur aufweist. Eine ähnliche Vorrichtung offenbart auch die AT511 476 B1 mit einem strukturierten Lichtleiter. Ebenso zeigt die US 2002/008969 A1 einen Lichtleiter, hier in Quaderform mit eingearbeiteten Strukturen, die der Ausrichtung des ausgekoppelten Lichts dienen sollen.

Die Strukturierung von Lichtleitern oder optischen Fasern im Allgemeinen, sowie ihre optische Wirkung ist in den Veröffentlichungen US 6 367 941 B2 und US 5 432 876 A beschrieben.

Aufgabe der Erfindung ist es, eine verbesserte Gargeräteleuchte bereitzustellen, die den o.g. Nachteilen entgegenwirkt.

Die Erfindung löst die Aufgabe durch eine Gargeräteleuchte mit den Merkmalen des Anspruchs 1, insbes. mit dessen kennzeichnenden Merkmalen, wonach der Lichtleitstab an seinem der Lichteinkopplungsfläche gegenüberliegenden Ende einen abgeschrägten Endbereich aufweist, der eine Positioniereinrichtung bildet, mit deren Hilfe der Lichtleitstab selbst und damit die Lichtauskopplungsfläche zum Innenraum des Gargeräts ausrichtbar sind.

Eine derartige Positioniereinrichtung erleichtert es erheblich, den Lichtleitstab exakt in der Position in dem Garraum anzuordnen, in der die Lichtauskopplungsfläche dem Garraum zugewandt ist. Auch beim Austausch eines beschädigten Lichtleitstabs, kann die Ausrichtung auf einfache Art und Weise erfolgen.

In einer bevorzugten Ausführungsform ist der Lichtleitstab der Beleuchtungseinrichtung aus Glas gefertigt. Besonders geeignete Glasarten sind beispielsweise Kalknatronglas oder Borosilikatglas. Glas eignet sich besonders aufgrund seiner hohen Temperaturbeständigkeit.

Vorteilhaft ist, dass in das Material Glas die erfindungsgemäße Auskopplungsstruktur, beispielsweise eine Satinierung, hervorragend eingearbeitet werden kann. Es entsteht so eine Vorrichtung, die auch bei sehr hohen Temperaturen beständig und störunempfindlich eine vollständige Beleuchtungsleistung erbringt. Selbst die in vielen Backofenmodellen als Reinigungsschritt zum Einsatz kommende Pyrolyse ist bei einer derartigen Ausführung unproblematisch durchzuführen, ohne dass ein Lichtleitstab hierdurch Schaden erleiden würde.

Die Positioniereinrichtung ist durch eine Abschrägung des Lichtleitstabs an seinem freien, der Lichteinkopplungsfläche abgewandten Ende ausgebildet. Durch die Abschrägung des Lichtleitstabs an seinem freien Ende wird eine Schrägfläche gebildet, die in einer leicht abgerundeten Spitze endet. Die Spitze kann durch Ausrichtung auf einen bestimmten Gegenpunkt im Garraum als Positionierhilfe dienen. Dies kann beispielsweise eine Markierung an der Garraumwandung sein auf die die Spitze hin ausgerichtet wird. Auch kann sie bei Einführung und Positionierung des Lichtleitstabs in einem Gegenstück zum Einliegen kommen, so dass die Spitze des Lichtleitstabes gehalten wird. Auf diese Weise ist nur eine Position des Lichtleitstabs möglich und die Auskopplungsstruktur ist optimal ausgerichtet um das Licht wie vorgesehen abzustrahlen.

Letztendlich ist die Abschrägung kostengünstig herstellbar. Ein Lichtleitstab wird bei seiner Produktion ohnehin durch einen Schnitt abgelängt. Dieser Schnitt kann auch in einem Winkel größer oder kleiner 90° zur Längsachse des Lichtleitstabes erfolgen, so dass ein abgeschrägter Endbereich entsteht. Durch die Wahl eines geeigneten Winkels - bevorzugt 42° - kann die entstehende Schrägfläche als Reflektionsfläche dienen und für die Totalreflektion des Restlichtes in den Garraum sorgen, was einen weiteren besonderen Vorteil der erfindungsgemäßen Ausbildung der Gargeräteleuchte darstellt.

Besonders vorteilhaft ist eine Auskopplungsstruktur die bei der erfindungsgemäßen Gargeräteleuchte durch eine Satinierung der Glasoberfläche gebildet ist, die sich über wenigstens einen Teil der Mantelfläche erstreckt. Eine Auskopplungsstruktur in Form einer Satinierung oder - alternativ - einer Säuremattierung der Glasoberfläche bewirkt, dass an der den derart behandelten Stellen das Licht aus dem Lichtleitstab diffus austritt.

Die Verwendung einer derartigen Auskopplungsstruktur ist vorteilhaft. Sie kann an die unterschiedlichsten Bedingungen angepasst werden. So kann die Auskopplungsstruktur an die Anordnung des Lichtleitstabs im Garraum angepasst sein.

Ist der Lichtleitstab beispielsweise in einem Eckbereich anzuordnen, so kann die Satinierung auf der dem Garraum zugewandten Seite, beispielsweise auf einem Umfangswinkel von 90° in den Lichtleitstab vorgesehen werden. Die dem Garraum zugewandte, satinierte Oberfläche des Lichtleitstabs strahlt das Licht dann diffus und blendfrei in den Garraum ab.

Ebenso ist eine umlaufende Satinierung des Lichtleitstabs, über die gesamte Mantelfläche von 360° möglich, wenn dies für die Anordnung im Garraum vorteilhaft ist.

Für die Gleichmäßigkeit der Ausleuchtung des Garraums kann es bei der erfindungsgemäßen Gargeräteleuchte von besonderem Vorteil sein, wenn sich die Auskopplungsstruktur ausgehend vom Lichteinkoppelbereich stetig verbreitert, so dass sie über die Länge des Lichtleitstabs im Wesentlichen keilförmig ausgebildet ist. Auf diese Weise ist in dem dem Lichteinkoppelbereich nahen Teil des Lichtleitstabs zunächst nur ein kleiner Teilumfang des Lichtleitstabs satiniert, über seine Länge hinweg wird die Satinierung zunehmend breiter. Eine derartig keilförmige Ausgestaltung fördert die Abstrahlung des Restlichts über die Länge des Lichtleitstabs hinweg. Die Lichtverteilung und somit die Beleuchtung des Garraums wirkt für den Betrachter so gleichmäßiger.

Eine weitere vorteilhafte Ausführungsform der Erfindung ist dadurch gekennzeichnet, dass die Auskopplungsstruktur aus einer Vielzahl von kuppelförmigen Elementen besteht, die durch keilförmige, parallel zueinander ausgerichtete Einschnitte in den Lichtleitstab gebildet sind. Die Einarbeitung paralleler und quer zur Längsachse des Lichtleitstabes ausgerichteter Einschnitte stellt eine weitere vorteilhafte Möglichkeit dar, über die Einarbeitung einer lichtlenkenden Struktur eine hochqualitative und gleichmäßige Abstrahlung von Licht über den Lichtleitstab zu erhalten. Die Einschnitte sind dabei keilförmig in den Lichtleitstab eingearbeitet, so dass zwischen den Einschnitten kuppelförmige Elemente aus der ursprünglichen Rundstabform des Lichtleitstabes verbleiben.

Für eine möglichst optimale Restlichtverteilung werden die Abstände der einzelnen Einschnitte zueinander von der Lichteinkopplungsfläche aus gesehen über die Länge des Lichtleitstabes hinweg stetig enger und gleichzeitig nimmt die Tiefe der Einschnitte zu.

Weitere Vorteile so wie ein besseres Verständnis der Erfindung folgen aus der Beschreibung von Ausführungsbeispielen. Es zeigen:
Fig. 1 eine perspektivische Ansicht einer ersten Ausführungsform der erfindungsgemäßen Gargeräteleuchte;
Fig. 2 eine erste mögliche Ausführungsform der Auskopplungsstruktur auf einem stabförmigen Lichtleitstab der erfindungsgemäßen Gargeräteleuchte gem. Fig. 1;
Fig. 3 eine zweite mögliche Ausführungsform der Auskopplungsstruktur auf einem stabförmigen Lichtleitstab der erfindungsgemäßen Gargeräteleuchte gem. Fig. 1;
Fig. 4 eine dritte mögliche Ausführungsform der Auskopplungsstruktur auf einem stabförmigen Lichtleitstab der erfindungsgemäßen Gargeräteleuchte gem. Fig. 1;
Fig. 5 eine perspektivische Ansicht einer zweiten Ausführungsform der erfindungsgemäßen Gargeräteleuchte;

In den Figuren ist eine Gargeräteleuchte - in der folgenden Beschreibung auch einfach nur Leuchte genannt, insgesamt mit der Bezugsziffer 10 bzw. 30 versehen.

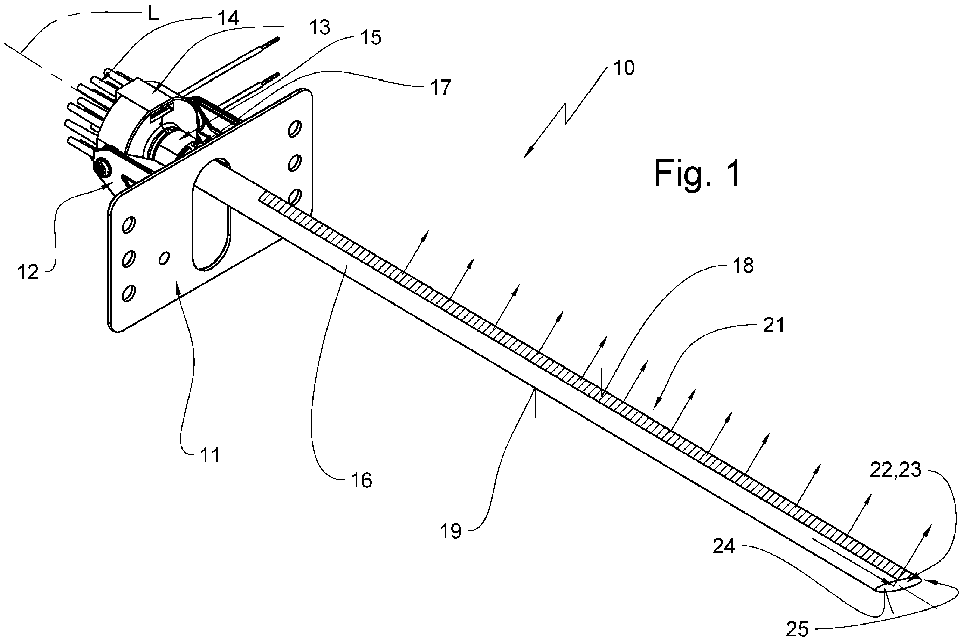

Eine erste Ausführungsform der erfindungsgemäßen Gargeräteleuchte ist in Fig. 1 dargestellt. Sie ist mit der Bezugsziffer 10 versehen. Die Gargeräteleuchte 10 umfasst eine Montageplatte 11, mit welcher sie in einem Gargerät befestigbar ist. Die Montageplatte 11 weist zwei Haltearme 12 auf, die zwischen sich eine Halteschale 13 tragen, welche einen Kühlkörper 14 hält, sowie eine nicht näher dargestellte Platine mit darauf angeordneter LED. Der Kühlkörper 14 dient dazu, die Betriebswärme der LED abzuführen.

Auf der der Montageplatte 11 zugewandte Seite bildet die Halteschale 13 eine Aufnahme 15 aus. Diese ist in Fig. 1 entsprechend der Außenkontur des Lichtleitstabes 16 kreisförmig geformt. In die Aufnahme 15 ist ein Lichtleitstab oder Lichtleiter 16 einsetzbar. Dieser ist aus Vollmaterial gefertigt. In Betracht kommen temperaturbeständige Kunststoffe oder bevorzugt Glas.

Glas - insbesondere Borosilikatglas oder Kalknatronglas - eignet sich besonders gut für den Einsatz in Gargeräten, in denen teils hohe Temperaturen generiert werden. Auf diese Weise sind die in den Garraum hineinragenden Partien des Lichtleitstabs 16 beständig und leistungsfähig, auch wenn sehr hohe Temperaturen zum Einsatz kommen, beispielsweise bei Reinigungsvorgängen mittels Pyrolyse.

Die der LED und der Platine zugewandte Seite des Lichtleitstabs 16, mit der er in die Aufnahme 15 eingesetzt ist, bildet eine Lichteinkopplungsfläche 17. Die auf der Halteschale 13 auf einer Platine angeordnete LED strahlt ihr Licht über diese Fläche in den Lichtleitstab 16 ein. Ein abschließender Kragen der Halteschale und/oder nicht näher dargestellte Halteelemente (z.B. Rastelemente) verhindern den unerwünschten Lichtaustritt an dieser Stelle.

Der Lichtleitstab 16 erstreckt sich von der Aufnahme 15 und der Montageplatte 11 aus gesehen entlang seiner Längsachse L in den Garraum. Er kann dabei teilweise oder vollständig in den Garraum hineinragen. Insbesondere aus Glas gefertigte Lichtleitstäbe sind auch bei hohen Temperaturen beständig und lassen sich auch im Garraum selbst anordnen.

Der Lichtleitstab 16 ist als Rundstab ausgebildet. Er weist eine Mantelfläche 19 auf. Auf dieser Mantelfläche 19 ist in Axialrichtung eine Auskopplungsstruktur 21 in den Lichtleitstab 16 eingearbeitet. Diese bildet bei dem vorliegenden Beispiel gleichzeitig die Lichtauskopplungsfläche 18, über die das Licht in den Garraum ausgekoppelt wird.

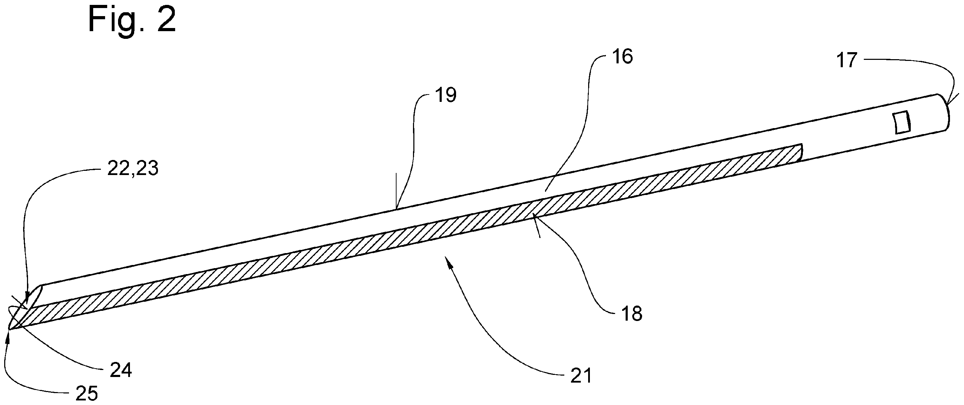

In Fig. 2 ist diese Auskopplungsstruktur 21 zur besseren Ansicht schraffiert dargestellt. Es kann sich um eine beispielsweise satinierte oder säuremattierte Oberfläche handeln. Erfindungsgemäß ist die Auskopplungsstruktur 21 in den Lichtleitstab 16 durch eine Strukturierung des Leitstabmaterials selbst in seiner Oberfläche gebildet. Die beispielsweise satinierte Oberfläche strahlt das in den Lichtleiter 16 eingekoppelte Licht diffus in den Garraum ab. Dies ist in Fig. 1 schematisch durch Pfeile angedeutet.

Reflektierende Beschichtungen, die einerseits aufwendig aufzubringen sind und andererseits auch bei hohen Temperaturen Schaden durch Abplatzen o. ä. nehmen könnten sind bei der erfindungsgemäßen Beleuchtungsvorrichtung 10 nicht erforderlich.

Kunden- oder bedarfsspezifisch kann die jeweilige Oberfläche eines Lichtleitstabes strukturiert werden, um eine Auskopplungsstruktur 21 zu bilden. Die Lichtlenkung kann durch die gewählte Struktur, ihre Ausrichtung, sowie Ausdehnung auf dem Lichtleitstab beeinflusst werden.

So zeigt Fig. 2 einen stabförmigen Lichtleiter 16 mit einer sich über fast die gesamte Länge des Lichtleitstabes 16 erstreckenden Satinierung, die in etwa ein Viertel, also 90° der Mantelfläche 19 des Lichtleitstabes 16 umfasst. Ein derartig ausgebildeter Lichtleitstab ist beispielsweise geeignet, in einer Ecke, d.h. einem Stoßbereich zweier Bleche der Ofenmuffel angeordnet zu werden. Die satinierte Oberfläche des Lichtleitstabes 16 würde dann in den Garraum weisend ausgerichtet, um eine gleichmäßige Ausleuchtung zu erzeugen.

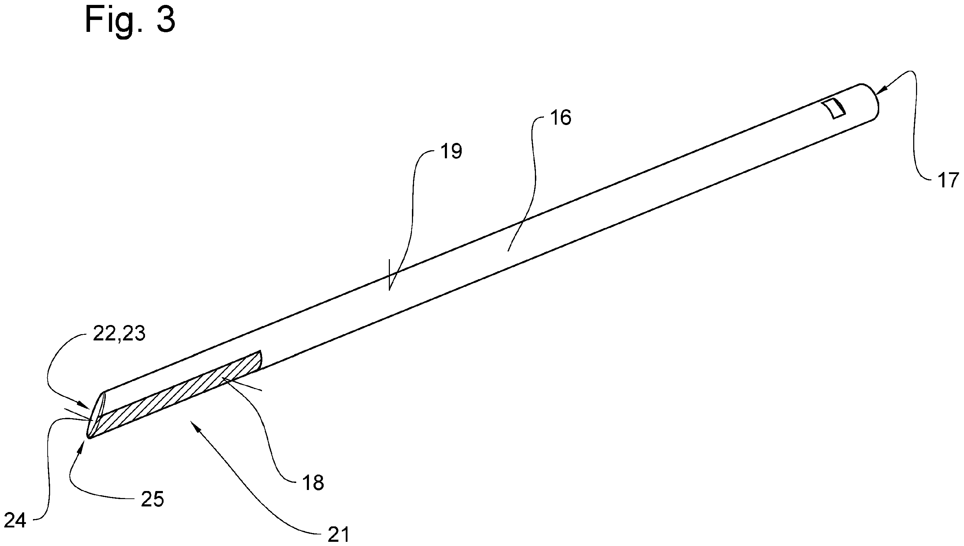

Fig. 3 zeigt eine weitere Variante der ersten Ausführungsform der Erfindung, bei der nur das untere, der Lichteinkopplungsfläche 17 abgewandte freie Ende 22 des Lichtleitstabes 16 eine Satinierung aufweist. Eine derartige Ausführungsform eignet sich beispielsweise für eine Anordnung im Zusammenhang mit einem (nicht dargestellten) Reflektor. Der satinierte Bereich würde dann in Richtung einer zusätzlich reflektieren Oberfläche eines Reflektors ausgerichtet, um eine gewünschte Beleuchtungssituation im Garraum darzustellen.

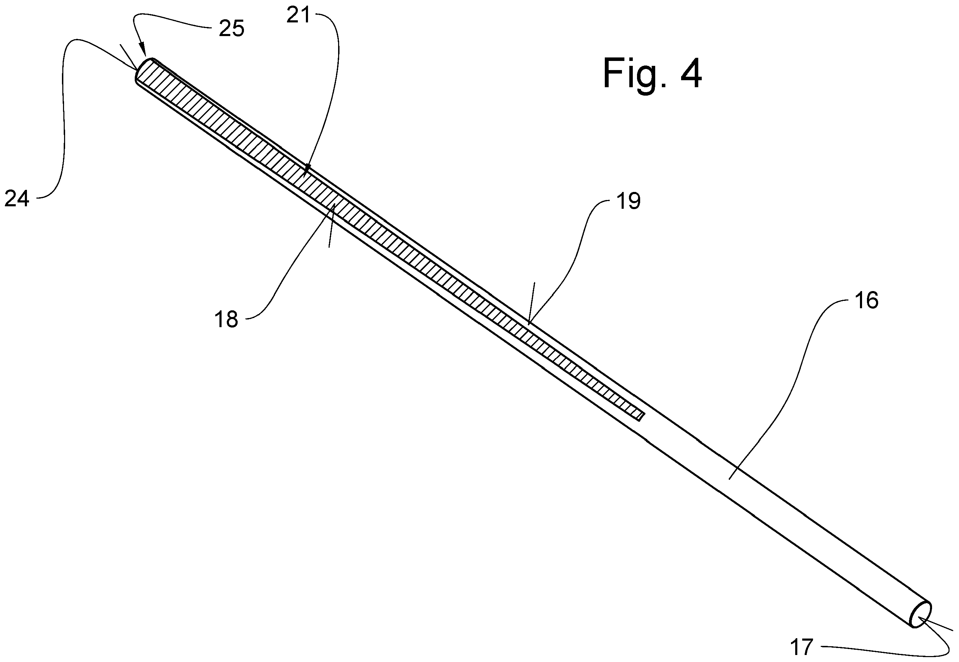

Fig. 4 wiederum zeigt eine dritte vorteilhafte Variante, bei der die Auskopplungsstruktur 21 sich keilförmig entlang der Längsachse L des Lichtleiters 16 erstreckt. Eine derartige Auskopplungsstruktur 21 ist von besonderem Vorteil, um eine möglichst gleichmäßige Abstrahlung des eingekoppelten Lichtes zu erzielen.

Besonders vorteilhaft zeigt sich die erfindungsgemäße Beleuchtungsvorrichtung mit der in den Figuren 1 bis 4 gezeigten Abschrägung 23 des Lichtleitstabes 16. Das freie Ende 22 des Lichtleitstabes 16 ist hier nicht senkrecht zur Längsachse L des Lichtleitstabes 16, sondern schräg dazu abgelängt.

Die Abschrägung 23 bildet mit ihrer polierten Oberfläche eine Reflektionsfläche 24 aus, welche dafür sorgt, dass das im Lichtleitstab 16 im Bereich des freien Endes 22 vorhandene Restlicht noch vollständig in den Garraum abgestrahlt wird.

Die Abschrägung 23 bildet gleichzeitig im Bereich des freien Endes 22 eine abgerundete Spitze 25 aus, welche als Positioniereinrichtung dient. Die Spitze 25 kann auf einen Gegenpunkt, beispielsweise eine Markierung ausgerichtet werden. Hiermit lässt sich die Ausrichtung des Lichtleitstabes 16 im Garraum exakt festlegen. Gleichzeitig wird auch die Auskopplungsstruktur 21 und damit die Lichtauskopplungsfläche 18 des Lichtleitstabes 16 zum Garraum hin exakt ausgerichtet.

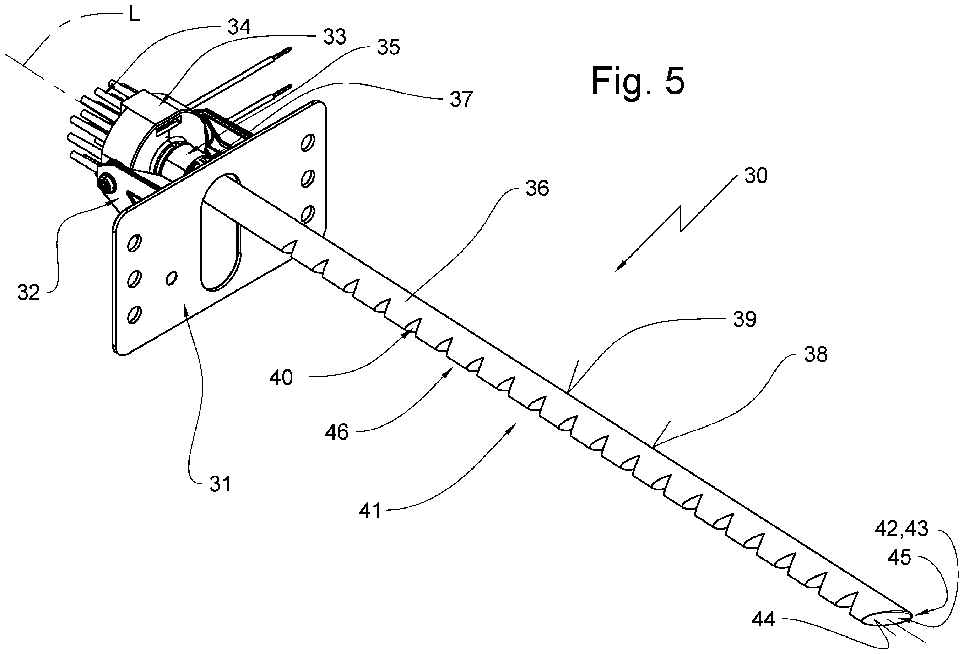

Fig. 5 zeigt eine zweite Ausführungsform der erfindungsgemäßen Gargeräteleuchte. Diese ist mit der Bezugsziffer 30 bezeichnet. Ebenso wie aus Fig. 1 zu der ersten Ausführungsform bekannt, umfasst die Gargeräteleuchte 30 eine Montageplatte 31 mit Haltearmen 32, und einer Halteschale 33. Die Halteschale 33 trägt einen Kühlkörper 34, der zur Kühlung der nicht näher dargestellten Platine der Gargeräteleuchte 30 mit darauf angeordneter LED dient.

Der bei dieser zweiten Ausführungsform gezeigte Lichtleitstab 36 ist mit seinem einen Ende, welches die Lichteinkopplungsfläche 37 bildet, in einer Aufnahme 35 gehalten, analog zu der Befestigung des Lichtleitstabs 16 in der Aufnahme 15. Auch der Lichtleitstab 36 ist ein aus Vollmaterial (bevorzugt Glas) gefertigter Rundstab mit einem im Wesentlichen kreisförmigen Querschnitt.

Der Lichtleitstab 36 erstreckt sich von der Aufnahme 35 und Montageplatte 31 aus gesehen entlang seiner Längsachse L in den Garraum. Er kann dabei teilweise oder vollständig in den Garraum hineinragen.

Der als Rundstab ausgebildete Lichtleitstab weist eine Mantelfläche 39 auf. Auf dieser Mantelfläche 39 ist ebenfalls in Axialrichtung eine Auskopplungsstruktur 41 in den Lichtleitstab 36 eingearbeitet. Die Auskopplungsstruktur 41 umfasst eine Vielzahl von in den Glasstab eingearbeiteten Einschnitte 40. Alle Einschnitte 40 sind parallel zueinander ausgerichtet. Die Einschnitte 40 liegen senkrecht zur Längsachse L des Lichtleitstabes 36. Ausgehend von der Lichteinkopplungsfläche 37 weisen die Einschnitte 40 eine zunächst nur geringe Tiefe auf, die zum freien Ende 42 des Lichtleitstabs 36 hin immer weiter zunimmt.

Durch die Einarbeitung der Einschnitte 40 verbleiben kuppelförmige Elemente 46. Das in den Lichtleitstab 36 an der Lichteinkopplungsfläche 37 eingekoppelte Licht wird in den durch die Einschnitte 40 gebildeten kuppelförmigen Elementen 46 mehrfach reflektiert und über die den kuppelförmigen Elementen 46 gegenüberliegenden Lichtauskopplungsfläche 38 aus dem Lichtleitstab in den Garraum ausgekoppelt.

Ebenso wie die erste Ausführungsform weist auch die zweite Ausführungsform der Erfindung eine Abschrägung 43 am freien Ende 42 des Lichtleitstabes 36 auf. Die Abschrägung 43 bildet auch hier mit ihrer polierten Oberfläche eine Reflektionsfläche 44 aus, welche für die vollständige Abstrahlung des restlichen im Bereich des freien Endes 42 vorhandenen Lichts in den Garraum sorgt.

Die Abschrägung 43 bildet im Bereich des freien Endes 42 eine abgerundete Spitze 45 aus, welche als Positioniereinrichtung dient. Auch bei dieser Ausführungsform kann die Spitze 45 auf einen Gegenpunkt, beispielsweise eine Markierung ausgerichtet werden. Hiermit lässt sich die Ausrichtung des Lichtleitstabes 36 im Garraum exakt festlegen. Die Spitze 45 bildet dabei den Endpunkt der Lichtauskopplungsfläche 38 am freien Ende 42 des Lichtleitstabes 36. Die Abschrägung ist demnach optimal ausgerichtet, um das im Endbereich des Lichtleitstabes 36 vorhandene Restlicht abzustrahlen.

### Bezugszeichenliste

- 10: Gargeräteleuchte
- 11: Montageplatte
- 12: Haltearme
- 13: Halteschale
- 14: Kühlkörper
- 15: Aufnahme
- 16: Lichtleitstab
- 17: Lichteinkopplungsfläche
- 18: Lichtauskopplungsfläche
- 19: Mantelfläche
- 21: Auskopplungsstruktur
- 22: freies Ende
- 23: Abschrägung
- 24: Reflektionsfläche
- 25: Positioniereinrichtung
- 30: Gargeräteleuchte
- 31: Montageplatte
- 32: Haltearme
- 33: Halteschale
- 34: Kühlkörper
- 35: Aufnahme
- 36: Lichtleitstab
- 37: Lichteinkopplungsfläche
- 38: Lichtauskopplungsfläche
- 39: Mantelfläche
- 40: Einschnitt
- 41: Auskopplungsstruktur
- 42: freies Ende
- 43: Abschrägung
- 44: Reflektionsfläche
- 45: Positioniereinrichtung
- 46: kuppelförmige Elemente

## Patentansprüche

1. Gargeräteleuchte (10, 30) einbaubar in einem Gargerät, insbesondere einem Backofen, einem Mikrowellengargerät oder einem Dampfgarer,
wobei das Gargerät einen Garraum aufweist, der von einer Garraumwandung umgrenzt ist und mit einer Garraumtür verschließbar ist,
mit wenigstens einer LED-Lichtquelle, die außerhalb des Garraums in einer Halterung (13, 33) befestigbar ist und
einem Lichtleitstab (16, 36), der sich von der Halterung (13, 33) aus entlang seiner Längsachse in den Garraum erstreckt,
wobei der Lichtleitstab (16, 36) im Wesentlichen als Rundstab ausgebildet ist,
wobei der Lichtleitstab (16, 36) eine Lichteinkopplungsfläche (17, 37,) aufweist, in welche Licht aus der Lichtquelle in den Lichtleitstab (16, 36) eingekoppelt wird,
und eine Lichtauskopplungsfläche (18, 38), aus welcher wenigstens ein Teil des eingekoppelten Lichts in den Garraum ausgekoppelt wird,
wobei
der Lichtleitstab (16, 36) auf seiner Mantelfläche eine eingearbeitete, lichtlenkende Auskopplungsstruktur (21, 41) umfasst, die das Licht über die Lichtauskopplungsfläche (18, 38) in den Garraum auskoppelt.
**dadurch gekennzeichnet, dass**
der Lichtleitstab (16, 36) an seinem der Lichteinkopplungsfläche (17, 37) gegenüberliegenden Ende einen abgeschrägten Endbereich (22, 23, 42, 43) aufweist, welcher eine Positioniereinrichtung (25, 45) bildet, mit deren Hilfe der Lichtleitstab (16, 36) und damit die Lichtauskopplungsfläche (18, 38) zum Garraum ausrichtbar sind.

2. Gargeräteleuchte (10, 30) gemäß Anspruch 1, **dadurch gekennzeichnet, dass** der Lichtleitstab (16, 36) aus Glas gefertigt ist.

3. Gargeräteleuchte (10) gemäß einem der vorangehenden Ansprüche, **dadurch gekennzeichnet, dass** die Auskopplungsstruktur (21) durch eine wenigstens teilweise Satinierung der Mantelfläche (19) des Lichtleitstabes (16) gebildet ist.

4. Gargeräteleuchte (10) gemäß Anspruch 3, **dadurch gekennzeichnet, dass** die sich die Auskopplungsstruktur (21) über 90° der Mantelfläche (19) des Lichtleitstabes (16) erstreckt.

5. Gargeräteleuchte (10) gemäß Anspruch 4, **dadurch gekennzeichnet, dass** sich die Auskopplungsstruktur (21) ausgehend von der Lichteinkopplungsfläche (17) stetig verbreitert, so dass sie über die Länge des Lichtleitstabs (16) im Wesentlichen keilförmig ausgebildet ist.

6. Gargeräteleuchte (30) nach einem der Ansprüche 1 oder 2, **dadurch gekennzeichnet, dass** die Auskopplungsstruktur (41) aus einer Vielzahl von kuppelförmigen Elementen (46) besteht, die durch keilförmige, parallel zueinander ausgerichtete Einschnitte (40) in den Lichtleitstab (36) gebildet sind.

7. Gargeräteleuchte (30) gemäß Anspruch 6, **dadurch gekennzeichnet, dass** die Abstände der Einschnitte (40) zueinander, ausgehend von der Lichteinkopplungsfläche (37), über die Länge des Lichtleitstabs (36) stetig enger werden und die Tiefe der Einschnitte (40) jeweils zunimmt.

## Claims

1. Cooking appliance light (10, 30) which can be installed in a cooking appliance, in particular an oven, a microwave cooking appliance or a steam cooker,
wherein the cooking appliance has a cooking chamber which is defined by a cooking chamber wall and can be closed off with a cooking chamber door,
having at least one LED light source which can be mounted outside the cooking chamber in a bracket (13, 33) and
a light guide rod (16, 36) which extends out from the bracket (13, 33) along its longitudinal axis into the cooking chamber,
wherein the light guide rod (16, 36) is substantially formed as a round rod,
wherein the light guide rod (16, 36) has a light coupling surface (17, 37) in which light from the light source is coupled into the light guide rod (16, 36),
and a light outcoupling surface (18, 38), from which at least one part of the coupled light is outcoupled into the cooking chamber,
wherein
the light guide rod (16, 36) comprises an incorporated, light-directing outcoupling structure (21, 41) on its lateral surface, which outcoupling structure outcouples the light via the light outcoupling surface (18, 38) into the cooking chamber.
**characterised in that**
the light guide rod (16, 36) has a bevelled end region (22, 23, 42, 43) on its end opposite the light coupling surface (17, 37), which end region forms a positioning device (25, 45), with the help of which the light guide rod (16, 36) and thus the light outcoupling surface (18, 38) can be oriented towards the cooking chamber.

2. Cooking appliance light (10, 30) according to claim 1, **characterised in that** the light guide rod (16, 36) is made of glass.

3. Cooking appliance light (10) according to one of the preceding claims, **characterised in that** the outcoupling structure (21) is formed by an at least partial satin finishing of the lateral surface (19) of the light guide rod (16).

4. Cooking appliance light (10) according to claim 3, **characterised in that** the outcoupling structure (21) extends across 90° of the lateral surface (19) of the light guide rod (16).

5. Cooking appliance light (10) according to claim 4, **characterised in that** the outcoupling structure (21) continuously spreads outwards from the light coupling surface (17) such that it is formed substantially wedge-shaped across the length of the light guide rod (16).

6. Cooking appliance light (30) according to one of claims 1 or 2, **characterised in that** the outcoupling structure (41) consists of a plurality of domed elements (46) which are formed by domed incisions (40) in the light guide rod (36) aligned parallel to one another.

7. Cooking appliance light (30) according to claim 6, **characterised in that** the distances between the incisions (40), starting from the light coupling surface (37), become continuously narrower across the length of the light guide rod (36), and the depth of the incisions (40) increases in each case.

## Revendications

1. Lampe pour appareil de cuisson (10, 30) pouvant être intégrée dans un appareil de cuisson, en particulier un four, un appareil de cuisson à microondes ou un cuiseur à vapeur,
cet appareil de cuisson comportant un espace de cuisson qui est délimité par une cloison d'espace de cuisson et peut être fermé avec une porte d'espace de cuisson,
avec au moins une source de lumière à LED qui peut être fixée à l'extérieur de l'espace de cuisson dans un dispositif de fixation (13, 33) et
un conduit de lumière (16, 36) qui s'étend à partir du dispositif de fixation (13, 33) le long de son axe longitudinal dans l'espace de cuisson,
le conduit de lumière (16, 36) étant sensiblement configuré comme une tige ronde,
le conduit de lumière (16, 36) comportant une surface d'admission de lumière (17, 37) par laquelle la lumière de la source lumineuse peut pénétrer dans le conduit de lumière (16, 36)
et une surface de sortie de lumière (18, 38) par laquelle au moins une partie de la lumière admise peut être éjectée dans l'espace de cuisson,
le conduit de lumière (16, 36) comportant dans sa surface latérale une structure de sortie (21, 41) intégrée guidant la lumière qui éjecte la lumière dans l'espace de cuisson à travers la surface de sortie de lumière (18, 38),
**caractérisée en ce que**
le conduit de lumière (16, 36) comporte à son extrémité opposée à la surface d'admission de lumière (17, 37) une zone terminal biseautée (22, 23, 42, 43) qui forme un élément de positionnement (25, 45) à l'aide duquel le conduit de lumière (16, 36) et par conséquent la surface de sortie de lumière (18, 38) peuvent être orientés vers l'espace de cuisson.

2. Lampe pour appareil de cuisson (10, 30) selon la revendication 1, **caractérisée en ce que** le conduit de lumière (16, 36) est fabriqué en verre.

3. Lampe pour appareil de cuisson (10) selon une des revendications précédentes, **caractérisée en ce que** la structure de sortie (21) est formée par un satinage au moins partiel de la surface latérale (19) du conduit de lumière (16).

4. Lampe pour appareil de cuisson (10) selon la revendication 3, **caractérisée en ce que** la structure de sortie (21) s'étend sur au moins 90% de la surface latérale (19) du conduit de lumière (16).

5. Lampe pour appareil de cuisson (10) selon la revendication 4, **caractérisée en ce que** la structure de sortie (21) s'élargit constamment à partir de la surface d'admission de lumière (17), de sorte qu'elle est configurée sensiblement en forme de coin sur la longueur du conduit de lumière (16).

6. Lampe pour appareil de cuisson (30) selon une des revendications 1 ou 2, **caractérisée en ce que** la structure de sortie (41) est constituée d'une multitude d'éléments en forme de dôme (46) qui sont formés par des échancrures (40) en forme de coin ménagées parallèlement les unes aux autres dans le conduit de lumière (36).

7. Lampe pour appareil de cuisson (30) selon la revendication 6, **caractérisée en ce que** les distances respectives des échancrures (40) diminuent constamment à partir de la surface d'admission de lumière (37) sur la longueur du conduit de lumière (36) tandis que la profondeur des échancrures (40) augmente.
